# EUROPÄISCHE PATENTSCHRIFT

(11) **EP 3 308 070 B1**
(45) Veröffentlichungstag und Bekanntmachung des Hinweises auf die Patenterteilung: **10.06.2020**
(21) Anmeldenummer: 16722524.2
(22) Anmeldetag: 25.04.2016
(51) Int. Cl.: F17C 1/16, B29D 22/02, F15B 1/16, B29C 49/04

(54) **VERFAHREN ZUM HERSTELLEN EINES BLASENSPEICHERS UND NACH DEM VERFAHREN HERGESTELLTER BLASENSPEICHER**
METHOD FOR THE PRODUCTION OF A BLADDER ACCUMULATOR AND BLADDER ACCUMULATOR PRODUCED ACCORDING TO SAID METHOD
PROCÉDÉ DE FABRICATION D'UN ACCUMULATEUR À VESSIE ET ACCUMULATEUR À VESSIE FABRIQUÉ SELON CE PROCÉDÉ

(30) Priorität: 09.06.2015 DE 102015007684
(43) Veröffentlichungstag der Anmeldung: 18.04.2018
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2016/000656
(87) Internationale Veröffentlichungsnummer: WO 2016/198138

(56) Entgegenhaltungen:
- EP-A1- 1 112 171
- EP-A1- 2 030 769
- WO-A1-2015/162355
- DE-A1-102010 033 623
- DE-A1-102011 111 098

## Beschreibung

Die Erfindung betrifft ein Verfahren zum Herstellen eines Blasenspeichers mit den Merkmalen im Oberbegriff von Anspruch 1.

Durch die DE 10 2006 004 120 A1 ist ein Hydrospeicher, insbesondere in Form eines Blasenspeichers, bekannt zwecks Aufnahme mindestens eines Fluidmediums mit einem Druckbehälter mit einem ersten Kunststoffmantel und einem den ersten Kunststoffmantel zumindest teilweise umfassenden zweiten Kunststoffmantel, wobei der erste Kunststoffmantel zumindest an seinem einen Ende ein Kragenteil aufweist, das eine Öffnung für ein Ventil für eine Ansteuerung der Medienzu- und -abfuhr umfasst und wobei das Kragenteil und der zweite Kunststoffmantel sich an einem dazwischenliegenden Außenstützring abstützen, der sich in Richtung einer Spaltöffnung zwischen den genannten Mänteln keilartig verjüngt.

Dadurch, dass bei der bekannten Lösung die Spaltöffnung zwischen den Mänteln bis an eine Stelle herangeführt ist, bei der die Mäntel in koaxialer Anordnung in Anlage miteinander sind und dass für die Ansteuerung der Medienzu- und -abfuhr in der Öffnung als Ventil ein Tellerventil eingesetzt ist, ist eine mediendichte Speicheranordnung geschaffen, die mit relativ geringen Herstellkosten realisierbar ist. Dadurch, dass bis in den Außenumfangsbereich der beiden Mäntel hinein die Abstützung über den keilartig sich verjüngenden Außenstützring erfolgt, sind eventuell auftretende Relativbewegungen zwischen den Kunststoffmänteln über den Außenstützring abgefangen und schädigende Delaminierprozesse sind dergestalt unmittelbar zwischen den empfindlichen Kunststoffmaterialien vermieden.

Der erste Kunststoffmantel wird fachsprachlich auch mit "Kunststoffkern-Behälter" oder mit "Liner" bezeichnet. Er besteht bevorzugt aus Polyamid und wird mittels eines Blasformprozesses oder durch Rotationssintern erhalten. Außenumfangsseitig wird dieser erste Kunststoffkern-Behälter oder Liner durch eine von außen aufgewickelte Faserwicklung als dem zweiten Kunststoffmantel verstärkt. Zum Schutz der Faserumwicklung lassen sich die einzelnen Fasern in einer Grundmatrix aus Duromeren, beispielsweise Epoxid- oder Phenolharzen, oder in Thermoplasten, beispielsweise in Form von PA6, PA12, PP etc., einbetten. Um sowohl das Tellerventil als Flüssigkeitsventil auf der einen Speichergehäuseseite einzubringen als auch das Gaseinfüllventil auf der gegenüberliegenden anderen Seite des Speichergehäuses, sind relativ große Durchgriffsöffnungen im Zwei-Mantel-Speichergehäuse notwendig, in die auch die jeweiligen Kragenteile einzubringen sind zwecks Festlegen des jeweiligen Ventils an seiner Gehäuseöffnungsseite.

Des Weiteren ist durch die DE 10 2011 111 098 A1 ein Druckbehälter bekannt, der vorzugsweise für den Einsatz bei Blasenspeichern vorgesehen ist, mit einem mehrteiligen Behälterkörper, bestehend aus einem rohrförmigen Mittenteil, das an mindestens einem seiner beiden Enden einen Abschlussbereich aufweist, wobei ein Abdeckteil, das zumindest teilweise den jeweiligen Abschlussbereich bildet, das Mittenteil zumindest im Bereich seines jeweilig zuordenbaren Endes unter Eingehen einer festen Verbindung randseitig übergreift.

Dabei ist bei der bekannten Lösung vorgesehen, dass das rohrförmige Mittenteil, ebenso wie die jeweilige Kappe, aus einem Faserverbundwerkstoff und/oder aus einem Laminat aus Fasern, vorzugsweise aus einem glasfaserverstärkten Kunststoffmaterial (GFK) gebildet sind. Dabei können bevorzugt Standardrohre aus GFK für das Mittenteil benutzt werden und die Kappen zum Abschluss des genannten Mittenteils sind bevorzugt im Handlaminierverfahren hergestellt und können aus vergleichbaren Kunststoffmaterialien aufgebaut sein.

Auf der Kappenseite des Speichergehäuses, die später das Flüssigkeitsventil des Speichergehäuses aufnimmt, ist eine relativ große Öffnung vorgesehen, die es erlaubt, die Speicherblase als Blasenkörper zusammen mit dem anvulkanisierten Gaseinfüllventil in das Innere des Speichergehäuses zu ziehen, um dann das dahingehende Gasventil auf der gegenüberliegenden Gehäuseseite in einer zugehörigen Öffnung im Speichergehäuse mit einem demgegenüber geringeren Durchmesser festzulegen. Im Hinblick auf die unterschiedlich groß dimensionierten Ventilöffnungen im Speichergehäuse sind die anschließend aufgebrachten Wicklungen zwangsläufig unterschiedlich gestaltet, wobei auch wiederum jede einzelne Wicklung im späteren Verbund eine unterschiedliche Gestaltung, insbesondere im Hinblick auf ihren Wanddurchmesser, aufweist, so dass der Faserlagenverbund zwar einfach gewickelt werden kann; bei der Einleitung von Kräften aber Schwächen aufweist, insbesondere wenn man in axialer Richtung des Speichergehäuses gesehen hohe Festigkeitswerte erzielen möchte.

Die EP 1 112 171 A1 und die DE 10 2010 033 623 A1 offenbaren Druckspeicher.

Die WO 2015/162355 A1 beschreibt ein Verfahren zum Herstellen eines Blasenspeichers, bei dem ein Blasenkörper in einem Speichergehäuse zwei Medienräume voneinander separiert.

Ausgehend von diesem Stand der Technik liegt der Erfindung die Aufgabe zugrunde, demgegenüber ein Verfahren zum Herstellen eines Blasenspeichers anzugeben, das kostengünstig realisierbar ist und das zu hohen Festigkeitswerten für das Speichergehäuse führt.

Eine dahingehende Aufgabe löst ein Verfahren mit den Merkmalen des Patentanspruchs 1 in seiner Gesamtheit.

Das erfindungsgemäße Verfahren zum Herstellen eines Blasenspeichers ist durch die folgenden Herstellschritte gekennzeichnet:
- Extrudieren eines Kunststoffschlauchs über den Blasenkörper;
- Formgebung des Kunststoffschlauchs mit integriertem Blasenkörper in einem einem vorgebbaren Kunststoffkern-Behälter entsprechenden Formwerkzeug; und
- Bewickeln des Kunststoffkern-Behälters von außen mit mindestens einer Kunststofffaser zwecks Erstellen des Speichergehäuses.

Die erfindungsgemäße Lösung beruht darauf, den Blasenkörper schon während des Formgebungsprozesses des Kunststoffkern-Behälters oder Liners in diesen zu integrieren. Dazu extrudiert man vorzugsweise im Formblasverfahren den Kunststoffschlauch über den Blasenkörper und schließt anschlie-ßend eine Blasform, regelmäßig bestehend aus einem dem herzustellenden Kunststoffkern-Behälter angepassten Formwerkzeug, mit mehreren, vorzugsweise zwei Formteilhälften.

Da der Blasenkörper mithin im Kunststoffkern-Behälter bereits integriert ist, der insoweit einen Teil des Gesamt-Speichergehäuses des Blasenspeichers darstellt, braucht die Trennblase resp. der Blasenkörper mit gegebenenfalls anvulkanisiertem Gaseinfüllventil nicht mehr später durch Fluiddurchgangsöffnungen für das Erstellen des Blasenspeichers hindurchgezogen zu werden, so dass man bei der Speicherherstellung weitgehend frei in der Wahl ist, wie groß man die Zugangs- oder Medienöffnungen zu wählen hat. Da man insoweit die freien Zugangsöffnungen im Speichergehäuse relativ klein wählen kann, steht auch viel Mantelmaterial des Kunststoffkerngehäuses zur Verfügung, das man vorzugsweise möglichst gleichmäßig bewickelt, so dass im Hinblick auf die Art der Bewicklung große Festigkeitswerte erreichbar sind. Dies hat so keine Entsprechung im Stand der Technik, wobei sich die Herstellung und der damit erhaltene Blasenspeicher als kostengünstig erweisen.

Bei einer bevorzugten Ausführungsform des erfindungsgemäßen Verfahrens ist vorgesehen, dass der bevorzugt aus elastomerem Material bestehende Blasenkörper vor dem Extrudieren des Kunststoffschlauches in seinem Inneren ein Vakuum aufweist. Dergestalt kann durch Anlegen des Vakuums im Blasenkörperinnern das elastisch nachgiebige Material desselben sich zusammenziehen und den Blasenkörper verschlanken, so dass hemmnisfrei mit gebührendem Abstand der Schlauch aus weichem Kunststoffmaterial von der Extruderdüse stammend und den Blasenkörper umgreifend an diesem vorbeigeführt werden kann, bis der Blasenkörper vollständig im Kunststoffschlauch aufgenommen ist. Dabei kann an den Blasenkörper das Gaseinfüllventil als eines der Medienventile des Blasenspeichers bereits anvulkanisiert sein. Anschließend wird der dahingehende Verbund von Kunststoffschlauch mit integriertem Blasenkörper nebst Ventil in ein geeignetes Blas-Formwerkzeug mit seinen Formteilhälften gebracht und durch Schließen der Formteilhälften, sprich des Formwerkzeuges, wird der fertige Kunstkern-Behälter des Blasenspeichergehäuses erhalten, der als Zwischenprodukt den Blasenkörper beinhaltet, der über sein anvulkanisiertes Gasventil am Kunststoffkern-Behälter festgelegt ist.

Sofern vorzugsweise in das dahingehende Formwerkzeug auf einer dem Gaseinfüllventil gegenüberliegenden Seite, ein Flüssigkeitsventil eingebracht und beim Formen des Kunststoffschlauches zum Kunststoffkern-Behälter gleichzeitig das Flüssigkeitsventil in das freie Ende des Schlauches eingeformt wird, lässt sich in besonders kostengünstiger Weise und quasi in einem Herstellschritt der Kunststoffkern-Behälter mit seinen beidseitigen Ventilen und mit aufgenommenem Blasenkörper herstellen.

Anschließend wird der Kunststoffkern-Behälter von außen her unter Freilassen der Ventilaufnahmestellen nebst den Ventilteilen mit mindestens einer Kunststofffaser zwecks Erstellen des fertigen Speichergehäuses bewickelt, wobei als Kunststofffasern besonders bevorzugt Kohlenstofffasern zum Einsatz kommen. Zum Schutz der Kohlenstofffaser-Bewicklung lässt sich diese dann in geeignetes Kunstharz anschließend einbetten.

Da bei der erfindungsgemäßen Lösung die Speicherblase respektive der Blasenkörper mit seinem anvulkanisierten Gaseinfüllventil nicht mehr über die Gehäuseöffnung für das Flüssigkeitsventil, regelmäßig in Form eines Tellerventils, eingebracht werden muss, was einen relativ großen Öffnungsquerschnitt an dieser Stelle im Speichergehäuse voraussetzt, können die freien Öffnungs- oder Durchtrittsquerschnitte für die Speichergehäuseventile auch auf der Flüssigkeitsseite des jeweiligen Speichers relativ klein dimensioniert ausfallen, beispielsweise bei einem durchschnittlichen Speicher in der Größenordnung von 50 bis 60 mm liegen, so dass insoweit sehr viel freie, angrenzende Mantelfläche des Kunststoffkern-Behälters zur Verfügung steht, mit der Möglichkeit der angrenzenden Bewicklung mit Kunststofffasern, wie Kohlenstofffasern.

Bei der dahingehenden Bewicklung eines solchen Kunststoffkern-Behälters oder Liners erfolgt die Ablage der einzelnen Faserbündel oder Faserstränge die fachsprachlich mit "Rovings" bezeichnet sind, nach der mathematischen Bedingung von Clairaut. Diese besagt, dass sich der kleinste Wickelwinkel aus dem Verhältnis von maximalem Durchmesser und dem Durchmesser am Wendepunkt des jeweiligen Rovings ergibt, in dem sich dessen Richtung ändert. Wird diese Bedingung nicht eingehalten, rutscht der jeweilige Roving von dem vorgebbaren Kunststoffkern-Behälter ab oder es kommt zu unnötigen Aufbauchungen des Fasermaterials in diesem Bereich, die dann nichts zur Festigkeitserhöhung mit beitragen können.

Von dieser Vorgabe in der praktischen Realisierung abweichende "geodätische Ablagen" kleineren Ausmaßes sind jedoch unschädlich aufgrund der Haftreibung der einzelnen übereinanderliegenden Rovings. Je größer die Öffnung am jeweiligen Wendepunkt, gebildet durch die im Speichergehäuse vorgesehenen Öffnungen für die Ventilaufnahmen, umso steiler wird der Wickelwinkel, was grundsätzlich zu einem dickeren Lagenaufbau führt, um die benötigte axiale Festigkeit für das Speichergehäuse zu erreichen. Kann man die dahingehenden Ventil-Durchtrittsöffnungen im gewickelten Speichergehäuse gemäß der Erfindung reduzieren, kann man mit einem viel kleineren Lagenaufbau in diesem Bereich gleichfalls ohne Weiteres die vorgegebene axiale Festigkeit erreichen und die geringere Anzahl an übereinanderliegenden Fasergelegen (Rovings), die bevorzugt in einem Umgebungsharz aufgenommen sind, reduziert die Gefahr eines ungewollten Delaminierens in diesem Bereich. Da Kohlestofffasermaterial entsprechend teuer ist, wie auch sonstige Kunststofffasern, lassen sich darüber hinaus durch den möglichen dünneren Lagenaufbau bei gleicher axialer Festigkeit die Herstellkosten für den Behälter deutlich reduzieren, so dass der Behälter oder Blasenspeicher als Ganzes kostengünstiger wird.

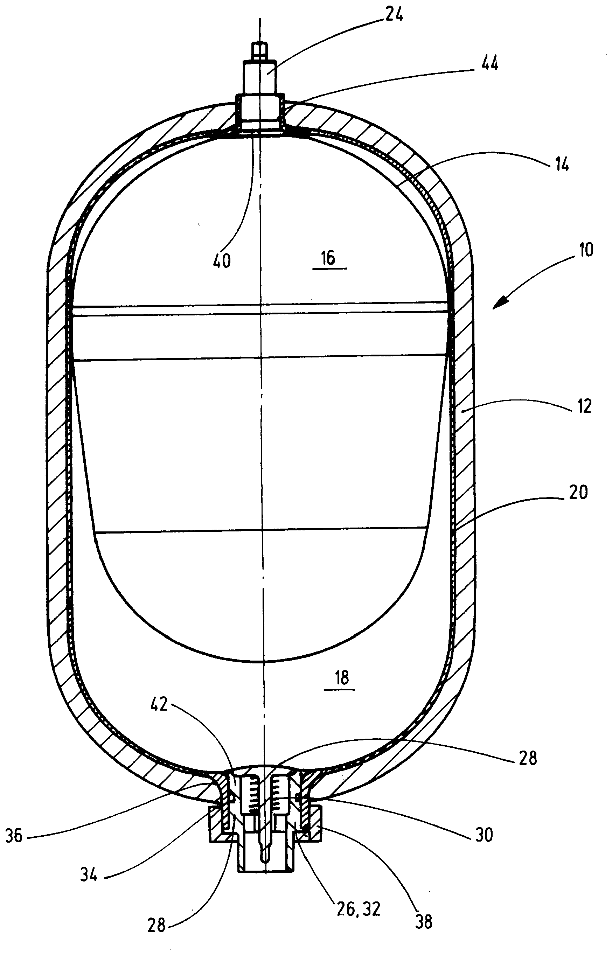

Im Folgenden wird das vorstehend beschriebene erfindungsgemäße Verfahren anhand eines ausgeführten Blasenspeichers nach der Figur näher erläutert. Dabei zeigt die einzige Figur in der Art einer prinzipiellen LängsschnittDarstellung einen Blasenspeicher nach der vorliegenden Erfindung.

Der in der Figur gezeigte und als Ganzes mit 10 bezeichnete Blasenspeicher weist ein Speichergehäuse 12 auf, das mittels eines Blasenkörpers 14 resp. einer Speicherblase zwei Medienräume 16, 18 voneinander separiert. Der erste Medienraum 16 des Blasenspeichers 10 dient regelmäßig der Aufnahme eines Arbeitsgases, wie Stickstoffgas, und der zweite Medienraum 18 nimmt eine Flüssigkeit, wie Hydrauliköl od. dgl., auf. Die dahingehenden Medienräume 16, 18 entsprechen also der üblichen Gas- bzw. Flüssigkeitsseite des Blasenspeichers 10.

Das Speichergehäuse 12 ist in der Art eines Composite-Druckbehälters aufgebaut mit einem innenliegenden Kunststoffkern-Behälter 20, der außenumfangsseitig mit einer Kunststofffaser bewickelt ist, die einen Kunststoffmantel 22 ausbildet. Anstelle der angesprochenen Kunststoffmaterialien für den Kunststoffkern-Behälter 20 sowie für den Kunststoffmantel 22 können auch metallische Werkstoffe zum Einsatz kommen, wie etwa Aluminium, das sich gut formen und insoweit gut auch in "ziehender Weise" verarbeiten lässt.

Der Kunststoffkern-Behälter 20 gemäß der Darstellung nach der Figur, der fachsprachlich auch mit "Liner" bezeichnet ist, besteht bevorzugt aus Polyamid oder Polyethylen und wird mittels eines Blasformprozesses oder durch Rotationssintern erhalten. Dahingehende Herstellverfahren sind üblich, so dass an dieser Stelle hierauf nicht mehr näher eingegangen wird.

Erfindungsgemäß ist vorgesehen, dass ein Gaseinfüllventil 24 in das Mantelmaterial des Blasenkörpers 14 einvulkanisiert ist, wobei der Blasenkörper 14 dann vorzugsweise aus einem elastomeren Kunststoffmaterial gebildet ist, wozu auch Naturkautschuk zählen soll. Das genannte Ventil 24 dient nicht nur zum Einfüllen des Arbeitsgases, wie Stickstoff, in den ersten Medienraum 16 des Blasenkörpers 14; vielmehr kann über dieses Ventil 24 auch Gas entnommen oder wieder, sofern notwendig, nachgefüllt werden, wobei über das Ventil 24 auch eine Gasdruckmessung über eine nicht näher dargestellte übliche Prüfvorrichtung möglich ist. Bevorzugt werden sowohl der Blasenkörper 14 als auch das Gaseinfüllventil 24 in eine übliche Blasform gemeinsam eingelegt, wobei dann anschließend über eine entsprechende Kunststoff-Extruderdüse ein Kunststoffschlauch über den Blasenkörper 14 nebst Gaseinfüllventil 24 extrudiert wird (nicht dargestellt). Anschließend erfolgt dann die Formgebung des dahingehend extrudierten weichen Kunststoffschlauchs mit dem integrierten Blasenkörper 14 nebst Ventil 24 in einem nicht näher dargestellten Blas-Formwerkzeug, wobei dann das Formwerkzeug mit seinen Formteilhälften derart eine Innenform hat, dass der Kunststoffkern-Behälter 20 gemäß der Darstellung nach der Figur erzeugt ist.

Um das Extrudieren des Kunststoffschlauchs über den Blasenkörper 14 nebst Ventil 24 nicht zu beeinträchtigen, kann im Inneren des Blasenkörpers 14 ein Vakuum angelegt werden, vorzugsweise über das Gaseinfüllventil 24, so dass der Blasenkörper 14 entsprechend verschlankt und insoweit nicht in Berührung mit dem weichen Kunststoffmaterial des Folienschlauchs während des Extrusions- und Formgebungsprozesses gelangt. Um die Herstellung weiter zu vereinfachen, wird vorzugsweise in das Blas-Formwerkzeug auf der gegenüberliegenden Seite zu dem Gaseinfüllventil 24 ein Flüssigkeitsventil 26, insbesondere in Form eines Tellerventils, eingelegt, so dass auch insoweit das Flüssigkeitsventil 26 formgebend von dem Kunststoffschlauch auf seiner freien Unterseite bei der Formgebung in bündiger Anschlussweise erfasst wird.

Über das Flüssigkeits- oder Tellerventil 26 wird der in der Figur gezeigte Blasenspeicher 10 an eine nicht näher dargestellte Hydraulikleitung eines Hydraulikkreises fluidführend angeschlossen. Ist der Druck auf der Flüssigkeitsseite größer als der Druck auf der Arbeitsgasseite in Form des ersten Medienraums 16, öffnet der Teller 28 unter zusätzlicher Wirkung einer an ihm angreifenden Druckfeder 30 und der zweite Medienraum 18 befüllt sich mit Fluid, wobei in Abhängigkeit der Druckverhältnisse im Inneren des Speichers der Blasenkörper 14 mit seinem kompressiblen Arbeitsgas zusammengedrückt wird, wobei sich der Gasdruck im Inneren des ersten Medienraums 16 gleichzeitig erhöht. Wird aus dem zweiten Medienraum 18 dann wieder Flüssigkeit bei geöffnetem Flüssigkeitsventil 26 aus dem Blasenspeicher 10 entnommen, kann sich der elastomere Blasenkörper 14 ausdehnen und gegebenenfalls mit seiner Unterseite auf den Teller 28 des Tellerventils 26 drücken, der dann entgegen der Wirkung der Druckfeder 30 in seine in der Figur gezeigte Schließstellung gelangt. Der längsverfahrbar in einem Ventilgehäuse 32 geführte Ventilteller 28 weist dabei auf seiner Oberseite eine konvexe Wölbung auf, um eine möglichst schonende Anlage der Speicherblase 14 mit der Oberseite des Tellers 28 zu gewährleisten.

Außenumfangsseitig weist das Ventilgehäuse 32 eine umlaufende Ringnut auf für die Aufnahme eines Dichtringes 34, der außenumfangsseitig in Anlage mit einem nach unten vorspringenden Anschlussstutzen 36 des insoweit fertigen Kunststoffkern-Behälters 20 kommt. Über eine Anschlussmutter 38 kann das Flüssigkeits- oder Tellerventil 26 in Position innerhalb des Anschlussstutzens 36, beispielsweise über nicht näher dargestellte Gewindeverbindungen, gehalten sein.

Da der Kunststoffkern-Behälter 20 sehr dünnwandig ausgebildet ist, beispielsweise eine Wandstärke von 2 mm aufweist, wird über den ersten und/oder zweiten Medienraum 16, 18 ein jeweils inkompressibles Medium, wie Wasser oder Alkohol, in einer vorgebbaren Menge eingebracht, um von der Innenseite des Speichergehäuses 12 auf den Kunststoffkern-Behälter 20 dergestalt einen Gegendruck aufzubauen, damit dieser von außen bewickelt werden kann, ohne befürchten zu müssen, dass der Liner 20 nach innen einknickt oder einbeult. Durch das inkompressible Medium auf der Innenseite des Blasenspeichers 10 ist der dünnwandige Kunststoffkern-Behälter 20 jedenfalls derart in Position gehalten und ausgesteift, dass die Wicklung ohne weiteres vonstatten gehen kann.

Der angesprochene Liner oder Kunststoffkern-Behälter 20 wird außenumfangsseitig durch eine von außen aufgewickelte Faserwicklung als eine Art zweiter Kunststoffmantel 22 verstärkt. Beispielsweise besteht die verstärkende Umwicklung aus einer Faserverstärkung in Form von Rovings, wie Kohlenstoff-, Aramit-, Glas-, Bor-, AL₂O₃-Fasern oder aus Gemischen hieraus, die man auch als Hybridgarne bezeichnet, und die in einer Grundmatrix aus Duromeren (Expoxid oder Phenolharzen) oder in Thermoplasten (PA6, PA12, PP) eingebettet sind. Der die stützende Hülle bildende Faserverbundwerkstoff enthält insoweit einander überkreuzende, in Kunstharz eingebettete Faserstränge (Rovings), die sich in Längs- und Umfangsrichtung erstrecken können. Bevorzugt weist die stützende Hülle 22 jedoch sich überkreuzende Faserstränge (Rovings) auf, die in der Längs- und Umfangsrichtung geneigt und in zweckmäßiger Weiterausgestaltung, in der Längsachse des Kunststoffkern-Behälters 20 spiegelbildlich geneigt, einander zugeordnet sind. Die längs- und umfangsgerichteten Kräfte, auch in Axialrichtung des Speichers gesehen, lassen sich hierdurch in optimaler Weise durch den Druckbehälter als Ganzes auffangen.

Die Darstellung nach der Figur verdeutlicht dem Fachmann auf diesem Gebiet unmittelbar, dass im Gegensatz zu sonstigen Lösungen im Stand der Technik (DE 10 2006 004 120 A1, DE 10 2011 111 098 A1) die freien Querschnitts- oder Durchtrittsöffnungen 40, 42 für das Gaseinfüllventil 24 bzw. für das Flüssigkeitsventil 26 vom Durchmesser her gesehen sehr klein ausfallen, beispielsweise bei einem 10-Liter-Blasenspeicher 10 in der Größenordnung von 50 mm bzw. 60 mm liegen können. Dies wurde so bisher im Stand der Technik nicht erreicht, weil man bei technisch vergleichbaren Lösungen immer über den Flüssigkeitsanschluss bei fertigem Speichergehäuse 12 den Blasenkörper 14 resp. die Speicherblase mit ihrem anvulkanisierten Gaseinfüllventil 24 über das Speicherinnere in Richtung der Gasseite des Speichergehäuses zu ziehen und dort auf der Gasseite über die zugeordnete Öffnung im Speichergehäuse festzulegen hatte. Da bei der erfindungsgemäßen Lösung der spätere Kunststoffkern-Behälter 20 bereits mit dem Schritt der Formgebung den Blasenkörper 14 nebst Ventil 24 integriert hat, braucht dieser nicht später erst noch in das Gehäuseinnere eingebracht zu werden. Da, wie bereits dargelegt, das Gaseinfüllventil 24 am Blasenkörper 14 an dessen Oberseite vorzugsweise bereits anvulkanisiert ist, ergibt sich beim Schließen des Formwerkzeugs für den extrudierten Kunststoffschlauch unter Bildung des Kunststoffkern-Behälters oder Liners 20 an der Oberseite des Folienmaterials eine Art ringförmige Quetschspalte 44, die bei ausgehärtetem Folienschlauch als Liner 20 die sichere Aufnahme des Gaseinfüllventils 24 im Speichergehäuse 12 ermöglicht. Eine entsprechend ringförmig ausgebildete Quetschspalte für das Flüssigkeitsventil 26 ist durch den zylindrischen Anschlussstutzen 36 des Folienschlauchs gleichermaßen gebildet. Es besteht aber grundsätzlich auch die Möglichkeit, bei eingezogener Speicherblase 14 ins Speicherinnere erst später bei fertigem Liner 22 die Ventile 24 und/oder 26 nachträglich anzubringen und das Ventil 24 am Blasenkörper 24 beispielsweise klebend festzulegen.

Da, wie dargelegt, die Öffnungsquerschnitte für die Öffnungen 40, 42 sehr klein bemessen sind, lässt sich der Wickelwinkel in diesem Bereich flach halten, so dass auch im Ventilanschlussbereich des Kunststoffmantels 22 ein vergleichmäßigter, dünner Lagenaufbau erreicht ist, der nicht zum Delaminieren neigt und dennoch die notwendige axiale Festigkeit gewährleistet. Insgesamt lässt sich dergestalt für den Kunststoffmantel 22 eine Wandstärke von 10 mm erreichen bei der angegebenen Blasen- oder Speichergröße von 10 Litern. Insbesondere erlaubt die erfindungsgemäße Speicherlösung ohne Zwischenschalten von metallischen Kragenteilen ein direktes Anlegen des Fasergeleges an die ringförmige Quetschspalte 44 sowie an den zylindrischen Anschlussstutzen 36 für das Gaseinfüllventil 24 bzw. für das Flüssigkeitsventil 26. Da auf dahingehende metallische Kragenteile vollständig verzichtet werden kann, baut der erfindungsgemäße Speicher auch konstruktiv leicht auf und ist dennoch hoch druckfest.

## Patentansprüche

1. Verfahren zum Herstellen eines Blasenspeichers (10), der in einem Speichergehäuse (12) mittels eines Blasenkörpers (14) zwei Medienräume (16, 18) voneinander separiert, **gekennzeichnet durch** mindestens die folgenden Herstellschritte:
- Extrudieren eines Kunststoffschlauches über den Blasenkörper (14),
- Formgebung des Kunststoffschlauches mit integriertem Blasenkörper (14) in einem einem vorgebbaren Kunststoffkern-Behälter (20) entsprechenden Formwerkzeug, und
- Bewickeln des Kunststoffkern-Behälters (20) von außen mit mindestens einer Kunststofffaser zwecks Erstellen des Speichergehäuses (12).

2. Verfahren nach Anspruch 1, **dadurch gekennzeichnet, dass** der bevorzugt aus elastomerem Material bestehende Blasenkörper (14) vor dem Extrudieren des Kunststoffschlauches in seinem Inneren ein Vakuum aufweist.

3. Verfahren nach Anspruch 1 oder 2, **dadurch gekennzeichnet, dass** vor dem Bewickeln des Kunststoffkern-Behälters (20) von außen dieser von innen her durch Einbringen eines vorzugsweise inkompressiblen Mediums auf der späteren Gas- und/oder Flüssigkeitsseite des Blasenspeichers (10) stabilisiert wird.

4. Verfahren nach einem der vorstehenden Ansprüche, **dadurch gekennzeichnet, dass** in das Wandmaterial des Blasenkörpers (14) ein Gaseinfüllventil (24) einvulkanisiert wird.

5. Verfahren nach einem der vorstehenden Ansprüche, **dadurch gekennzeichnet, dass** in das Speichergehäuse (12) auf seiner dem Gaseinfüllventil (24) gegenüberliegenden Seite ein Flüssigkeitsventil (26) eingebracht wird, das bei entleertem Speichergehäuse (12) vom sich ausdehnenden Blasenkörper (14) betätigt in seine Schließstellung gelangt.

6. Verfahren nach einem der vorstehenden Ansprüche, **dadurch gekennzeichnet, dass** das Flüssigkeitsventil (26) in den Kunststoffkern-Behälter (20) vor dessen Bewicklung eingebracht wird.

7. Verfahren nach einem der vorstehenden Ansprüche, **dadurch gekennzeichnet, dass** das Flüssigkeitsventil (26) mit Schließen der Formhälften des Formwerkzeugs von dem freien Folienschlauchende (36) umfasst wird.

8. Verfahren nach einem der vorstehenden Ansprüche, **dadurch gekennzeichnet, dass** der Durchmesser des Kunststoffkern-Behälters (20) im Bereich der Aufnahme des Flüssigkeitsventils (26) im Wesentlichen gleich oder im selben Größenbereich liegend gewählt wird wie der Durchmesser des Kunststoffkern-Behälters (20) im Bereich der Aufnahme für das Gaseinfüllventil (24).

9. Verfahren nach einem der vorstehenden Ansprüche, **dadurch gekennzeichnet, dass** die Wandstärke des Kunststoffkern-Behälters (20) und die Wandstärke der fertigen Wicklung jeweils im Wesentlichen durchgehend gleich gewählt werden.

## Claims

1. Method for manufacturing a bladder accumulator (10), which separates two media chambers (16, 18) from one another in an accumulator housing (12) by means of a bladder body (14), **characterised by** at least the following manufacturing steps:
- a plastic tube is extruded over the bladder body (14),
- the plastic tube with the integral bladder body (14) is moulded in a moulding tool corresponding to a pre-definable plastic liner (20), and
- the plastic liner (20) is wound from the outside with at least one plastic fibre to create the accumulator housing (12).

2. Method according to claim 1, **characterised in that** the bladder body (14), which preferably consists of an elastomer material, has a vacuum in its inner chamber before the plastic tube is extruded.

3. Method according to either claim 1 or claim 2, **characterised in that**, before the plastic liner (20) is wound from the outside, said liner is stabilised from the inside by applying a preferably incompressible medium to the subsequent gas and/or liquid side of the bladder accumulator (10).

4. Method according to any one of the preceding claims, **characterised in that** a gas filling valve (24) is vulcanised into the wall material of the bladder accumulator (14).

5. Method according to any one of the preceding claims, **characterised in that** a liquid valve (26) is accommodated in the accumulator housing (12) on the side of said accumulator housing opposite the gas filling valve (24), said liquid valve moving into its closing position when the accumulator housing (12) has drained, as actuated by the expanding bladder body (14).

6. Method according to any one of the preceding claims, **characterised in that** the liquid valve (26) is placed inside the plastic liner (20) before said liner is wound.

7. Method according to any one of the preceding claims, **characterised in that** the liquid valve (26) is surrounded by the free tubular film end (36), closing the halves of the mould of the moulding tool.

8. Method according to any one of the preceding claims, **characterised in that** the diameter of the plastic liner (20) in the region of the seat for the liquid valve (26) is selected so as to be substantially the same or in the same order of magnitude as the diameter of the plastic liner (20) in the region of the seat for the gas filling valve (24).

9. Method according to any one of the preceding claims, **characterised in that** the wall thickness of the plastic liner (20) and the wall thickness of the finished winding are each selected so as to be substantially the same throughout.

## Revendications

1. Procédé de fabrication d'un accumulateur (10) à vessie, qui, dans une enveloppe (12) d'accumulateur, sépare l'un de l'autre deux espaces (16, 18) pour des fluides au moyen d'une vessie (14), **caractérisée par** les stades de fabrication suivants :
- extrusion d'un tube souple en matière plastique sur la vessie (14),
- façonnage du tube souple en matière plastique avec la vessie (14) intégrée dans un outil de moulage correspondant à un récipient (20) à noyau en matière plastique pouvant être donné à l'avance, et
- enroulement de l'extérieur du récipient (20) de noyau en matière plastique par au moins une fibre en matière plastique, en vue de produire l'enveloppe (12) de l'accumulateur.

2. Procédé suivant la revendication 1, **caractérisé en ce que** la vessie (14), constituée de préférence en une matière élastomère, a, à l'intérieur, un vide avant l'extrusion du tube souple en matière plastique.

3. Procédé suivant la revendication 1 ou 2, **caractérisé en ce qu'**avant l'enroulement de l'extérieur du récipient (20) de noyau en matière plastique, on le stabilise de l'intérieur par introduction d'un fluide, de préférence incompressible, du côté ultérieur du gaz et/ou du liquide de la vessie (10) .

4. Procédé suivant l'une des revendications précédentes, **caractérisé en ce que** l'on introduit, par vulcanisation, une soupape (24) de remplissage de gaz dans la matière de paroi de la vessie (14).

5. Procédé suivant l'une des revendications précédentes, **caractérisé en ce que** l'on introduit, dans l'enveloppe (12) de l'accumulateur, sur son côté opposé à la soupape (24) de remplissage de gaz, une soupape (26) à liquide, qui, lorsque l'enveloppe (12) de l'accumulateur est vidée, parvient, en étant actionnée par la vessie (14) qui s'agrandit, dans sa position de fermeture.

6. Procédé suivant l'une des revendications précédentes, **caractérisé en ce que** l'on introduit la soupape (26) à liquide dans le récipient (20) de noyau en matière plastique avant son enroulement.

7. Procédé suivant l'une des revendications précédentes, **caractérisé en ce que** la soupape (26) à liquide est, avec la fermeture des moitiés de moule de l'outil de moulage, entourée de l'extrémité (36) libre d'un tube souple en feuille.

8. Procédé suivant l'une des revendications précédentes, **caractérisé en ce que** l'on choisit le diamètre du récipient (20) de noyau en matière plastique dans la région de la réception de la soupape (26) à liquide sensiblement égal ou du même ordre de grandeur que le diamètre du récipient (20) de noyau en matière plastique dans la région de la réception de la soupape (24) de remplissage de gaz.

9. Procédé suivant l'une des revendications précédentes, **caractérisé en ce que** l'on choisit l'épaisseur de paroi du récipient (20) de noyau en matière plastique et l'épaisseur de paroi de l'enroulement fini, respectivement, égales sensiblement d'une manière continue.
